# EUROPEAN PATENT SPECIFICATION

(11) **EP 1 762 161 B1**
(45) Date of publication and mention of the grant of the patent: **25.06.2014**
(21) Application number: 06254595.9
(22) Date of filing: 04.09.2006
(51) Int. Cl.: A47J 27/21

(54) **Liquid heating vessels**
Wasserkocher
Bouilloire

(30) Priority: 09.09.2005 GB 0518338
(43) Date of publication of application: 14.03.2007
(60) Divisional application: 10180451.6
(73) Proprietor: STRIX LIMITED, Ronaldsway, Isle of Man IM9 2RG (GB)
(72) Inventor: Scott, Michael James, Onchan, Isle of Man IM3 2AU (GB)
(74) Representative: Samuels, Adrian James

(56) References cited:
- EP-A1- 1 462 039
- WO-A2-97/04694
- WO-A2-02/085169
- DE-A1- 10 131 995
- FR-A1- 2 810 526
- US-B1- 6 834 160

## Description

This invention relates to underfloor heaters which form or close an opening in the base of a liquid heating vessel.

Underfloor heaters for liquid heating vessels are well known and may be divided generally into two categories: sheathed heaters, which have a sheathed resistance element mounted to or formed on the underside of a metal base plate; and thick film heaters which comprise a printed resistance track on the underside of the base plate. In both cases it is conventional to provide an aluminium diffuser plate between the heating element/track and the base plate itself which is usually of stainless steel. Such a diffuser plate serves several functions, an important one of which is to conduct heat from the element to a thermally responsive sensor in order that overheating caused, for example, by operating the heater without any liquid in the vessel, may be sensed quickly and action taken to switch off the heater.

In some applications however, it is desirable to use a thermal sensor to measure the temperature of liquid in the vessel through the heated base. This might, for example, be done in order to heat the liquid to or maintain it at a temperature below boiling. An example of a control arrangement which is designed to do just that is the Applicant's U19 series of controls described in EP-A-1233649. In that document there is disclosed the idea of providing apertures in the diffuser plate between the element and the thermal sensor in order at least partially to decouple the thermal sensor from the direct influence of the heating element, thereby allowing it better to follow the temperature of the liquid in the vessel.

The Applicant has realised that whilst this arrangement is indeed effective it cannot give complete isolation of the sensor from the heater since there must always be part of the diffuser plate which connects the location of the sensor to the heating element.

FR-A1-2810526 discloses a diffuser plate for an underfloor heater that has a sensing region separated from the diffuser plate by an air gap.

It is an object of the present invention to improve upon or at least provide an alternative to such arrangements and thus when viewed from a first aspect the invention provides a liquid heating vessel as claimed in claim 1.

Thus it will be seen by those skilled in the art that in accordance with the invention the sensing region is thermally isolated from the element since it is not connected to the diffuser portion. The sensing region need not have a diffuser portion or the like so that the thermal sensor is arranged to bear directly on to the base plate. However, it is preferred to provide a second heat diffuser portion between the thermal sensor and the base plate. This could be of any suitable material or construction but is preferably of similar characteristics - such as thickness and/or material - to the main heat diffuser portion. Having a diffuser portion in the sensing region is advantageous since it increases the heat capacity of the sensing region which permits better thermal sensing and provides a mechanical 'filter' of the temperature signal. Additionally where, as is preferred, the heat diffuser portion in at least the sensing region is of aluminium, more intimate mating of the thermal sensor can be achieved since aluminium is softer than stainless steel of which the base plate is typically made.

Simply having a separate 'island' diffuser portion not connected to the main diffuser portion would give rise to significant manufacturing difficulties since the two portions of diffuser material would need to be located and held in place during brazing. However, the wall which partly or fully surrounds the sensing region enables the second diffuser portion in the sensing region to be held in place during brazing.

In accordance with any preceding aspect of the invention the wall could itself be attached to the base plate e.g. by soldering, welding or brazing etc, but in particularly preferred embodiments the wall is provided by forming a channel in the upper, liquid facing side of the base plate. This not only allows the heater to be manufactured conveniently and without requiring a separate part, but the Applicant has also appreciated that since the channel will fill with the liquid being heated during use, it will further enhance the thermal isolation of the sensing region from the heating element and the thermal coupling of the sensing region to the liquid.

As mentioned above, in at least some embodiments of the invention the heating element comprises a sheathed resistance element. The sheathed element could be provided on the main diffuser portion so that the latter is sandwiched between the element and the base plate, or alternatively the element could be provided directly on the base plate whilst also being in good thermal contact with the diffuser plate e.g. by means of an edge thereof.

The sensing region may be on any convenient part of the heater and the location may be dictated by design constraints imposed by a corresponding control unit. Preferably however it is located substantially centrally on the base plate. This is beneficial where a sheathed heating element is provided around the periphery of the plate as the centre is then one of the parts of the which receive least heat. This further enhances the thermal isolation of the sensing region from the heating element.

Certain embodiments of the present invention will now be described, by way of example only, with reference to the accompanying drawings in which:
Fig. 1 is a bottom elevation of an underfloor heater in accordance with the present invention;
Fig. 2 is a section on line AA of Fig. 1;
Fig. 3 is an enlarged view of part of the section of Fig. 2 marked B ; and
Fig. 4 is a view similar to Fig. 3 of a second embodiment of the invention.

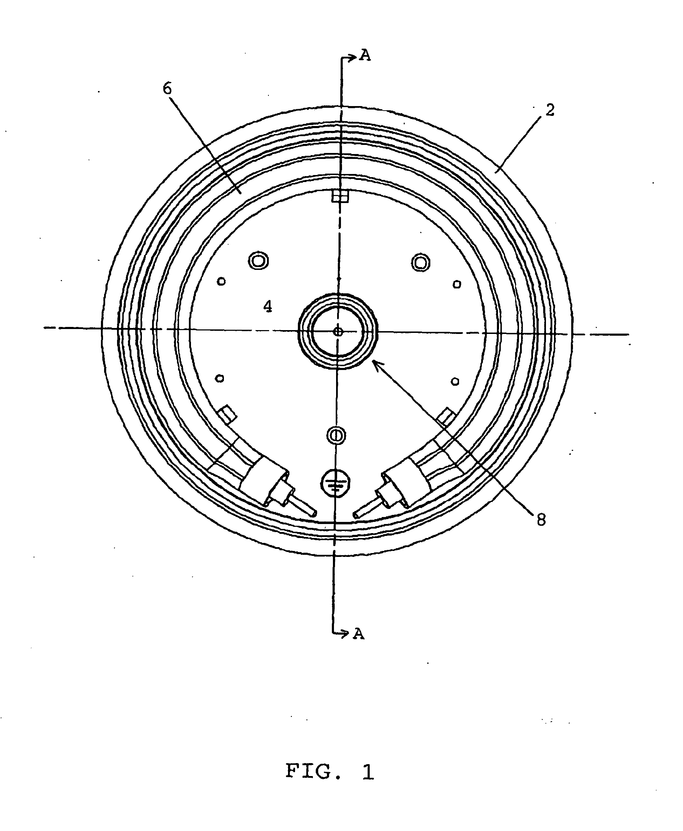

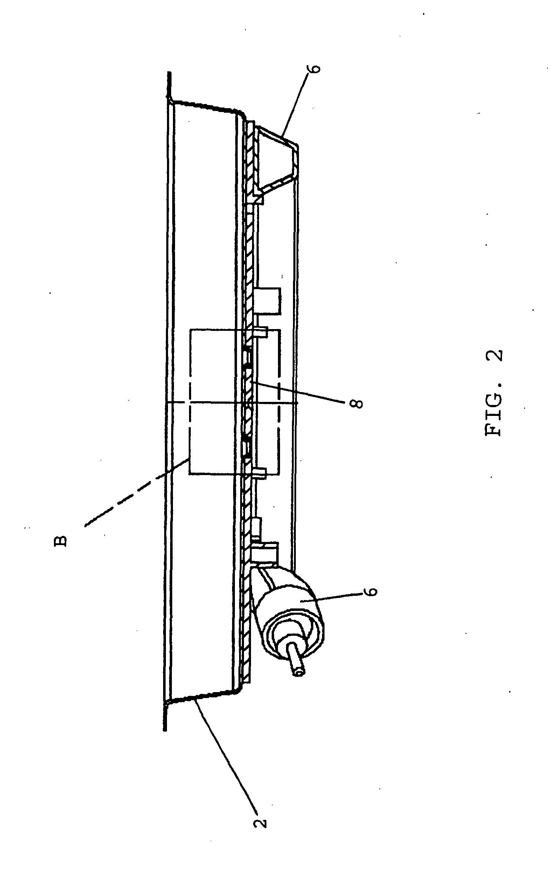

Figures 1 and 2 show an underfloor heater for closing an opening in or forming the base of a liquid heating vessel. The heater comprises a dish-shaped stainless steel base plate 2. This is shown as having a flat lip at its periphery although equally it could be provided with an upwardly open peripheral channel in accordance with the Applicant's Sure Seal system which is described in further detail in WO 96/18331.

On the underside of the base plate 2 is an aluminium diffuser plate 4. An annular sheathed heating element 6 of well known type is brazed to the diffuser plate 4 at its periphery. This will typically be rated at between 2.2 and 3 kilowatts.

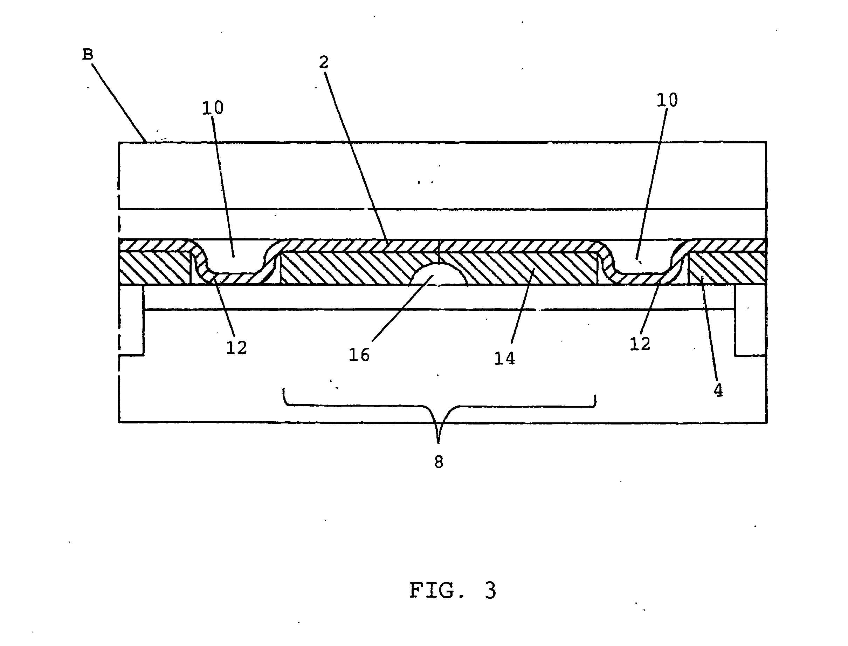

At the centre of the heater the aluminium diffuser plate 4 has a circular hole inside which is defined a sensing region 8 which will be described in greater detail below with reference to Figure 3.

Radially inwardly of the hole at the centre of the diffuser plate 4, the base plate 2 is formed with an annular channel 10 on its wet face which forms a corresponding annular wall 12 on the underside of the plate. The annular wall 12 defines inside it the circular sensing region 8 which is provided with a second separate diffuser portion comprising a disc of aluminium 14 of the same thickness as the main diffuser plate 4 brazed to the underside of the base plate 2.

In the centre of the aluminium disc 14 is a recess which is shaped to receive a thermal sensor, for example a thermistor.

A control unit (not shown) may be mounted to the underside of the heater so that a thermal sensor, e.g. a thermistor, is received against the recess 16 of the sensing region 8. Of course the thermal sensor need not be part of an integrated control unit but could be a separate component.

In use the vessel is filled with water and the element 6 is energised to heat the water. The temperature of the main diffuser plate 4 will be a function of both the temperature of the element 6 and of the liquid inside the vessel. The degree of influence of the element temperature upon the temperature of the surface of the main diffuser plate 4 will be dependent upon the distance from the element.

However, the temperature of the central diffuser portion 14 in the sensing region pad 14, and thus the temperature seen by the thermal sensor, will be predominantly influenced by the temperature of the water in the vessel since there is a relatively short thermal path through the thin stainless steel base plate 2. There is no direct connection between the sensing pad 14 and the main diffuser plate 4 and indeed the water in the channel 10; and the wall 12; both act as thermal barriers. This means that a sensor placed against the recess 16 can accurately measure the temperature of the water and thereby signal the control to stop heating or reduce the power when a predetermined temperature is reached e.g. 80-85° which is considered the ideal temperature for brewing coffee.

Of course there may be other reasons why it would be desirable to measure the temperature of the liquid in the vessel - for example to measure the rate of change thereof accurately to determine the volume, whether the water is approaching boiling etc.

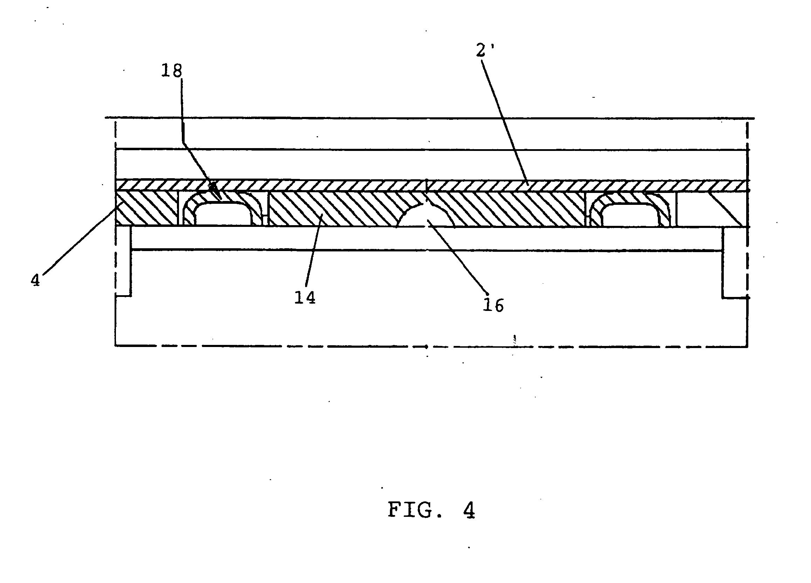

A further embodiment of the invention is shown in Figure 4. In this embodiment the base plate 2' does not have an annular channel as in the first embodiment but rather the main central region of the base plate is flat. Instead, a separate annular ring member 18 is initially welded to the underside of the base plate 2' and therefore performs the same function as the annular wall 12 in the first embodiment - namely to locate the central aluminium disc 14 during manufacture and also to act as a thermal barrier between the central aluminium disc 14 as the main diffuser plate 4. In all other respects this embodiment is the same as the previous one.

It will be appreciated by those skilled in the art that the embodiments described are merely examples of how the invention may be put into practice and many modifications and variation therefrom are possible within the scope of the invention as defined by the claims. For example, it is not applicable only to sheathed element heaters but can also be applied to thick film heaters. Furthermore, it is not essential for a continuous annular wall to be provided instead it may extend only part way around the sensing region; could be a shape other than circular or arcuate; or could comprise a series of discrete features or protrusions rather than a continuous wall.

## Claims

1. A liquid heating vessel including an underfloor heater comprising a base plate (2), a heat diffuser portion (4) in good thermal contact with the base plate (2), a heating element (6) in good thermal contact with the diffuser portion (4) and a sensing region (8) receiving a thermal sensor wherein said sensing region (8) is not directly connected to the diffuser portion (4) and is at least partly surrounded by a wall formed by, or attached as a separate part to, the base plate and wherein said thermal sensor is arranged to measure the temperature of liquid in the vessel through the heated base in order for the vessel to heat the liquid to or maintain it at a temperature below boiling.

2. A liquid heating vessel as claimed in claim 1 wherein a second heat diffuser portion (14) is provided between the thermal sensor and the base plate (2).

3. A liquid heating vessel as claimed in claim 2 wherein said second heat diffuser portion (14) is of similar characteristics to the main heat diffuser portion (4).

4. A liquid heating vessel as claimed in claim 2 or 3 wherein said second heat diffuser portion (14) is of aluininium.

5. A liquid heating vessel as claimed in any preceding claim wherein the wall (12) completely surrounds the sensing region (8).

6. A liquid heating vessel as claimed in any preceding claim wherein the wall (12) is provided by forming a channel in the upper, liquid facing side of the base plate (2).

7. A liquid heating vessel as claimed in any preceding claim wherein the heating element (6) comprises a sheathed resistance element.

8. A liquid heating vessel as claimed in any preceding claim wherein the sensing region (8) is located substantially centrally on the base plate (2).

## Patentansprüche

1. Flüssigkeitsheizgefäß, das eine Unterflurheizung mit einer Grundplatte (2), einem Wärmediffusorabschnitt (4) in gutem thermischen Kontakt mit der Grundplatte (2), einem Heizelement (6) in gutem thermischen Kontakt mit dem Diffusorabschnitt (4) und einem Erfassungsbereich (8), der einen Wärmesensor aufnimmt, enthält, wobei der Erfassungsbereich (8) nicht direkt mit dem Diffusorabschnitt (4) verbunden ist und wenigstens teilweise von einer Wand umgeben ist, die durch die Grundplatte gebildet ist oder als ein getrenntes Teil an der Grundplatte befestigt ist, und wobei der Wärmesensor dafür ausgelegt ist, die Temperatur von Flüssigkeit in dem Gefäß durch die erwärmte Grundplatte zu messen, damit das Gefäß die Flüssigkeit auf eine Temperatur unterhalb des Siedens erwärmt oder sie auf dieser Temperatur hält.

2. Flüssigkeitsheizgefäß nach Anspruch 1, wobei zwischen dem Wärmesensor und der Grundplatte (2) ein zweiter Wärmediffusorabschnitt (14) vorgesehen ist.

3. Flüssigkeitsheizgefäß nach Anspruch 2, wobei der zweite Wärmediffusorabschnitt (14) ähnliche Eigenschaften wie der Hauptwärmediffusorabschnitt (4) besitzt.

4. Flüssigkeitsheizgefäß nach einem der Ansprüche 2 oder 3, wobei der zweite Wärmediffusorabschnitt (14) aus Aluminium besteht.

5. Flüssigkeitsheizgefäß nach einem vorhergehenden Anspruch, wobei die Wand (12) den Erfassungsbereich (8) vollständig umgibt.

6. Flüssigkeitsheizgefäß nach einem vorhergehenden Anspruch, wobei die Wand (12) durch Bilden eines Kanals in der oberen, der Flüssigkeit zugewandten Seite der Grundplatte (2) gebildet ist.

7. Flüssigkeitsheizgefäß nach einem vorhergehenden Anspruch, wobei das Heizelement (6) ein ummanteltes Widerstandselement enthält.

8. Flüssigkeitsheizgefäß nach einem vorhergehenden Anspruch, wobei sich der Erfassungsbereich (8) im Wesentlichen mittig auf der Grundplatte (2) befindet.

## Revendications

1. Bouilloire comprenant un élément chauffant par le bas comportant une plaque de base (2), une partie de diffusion de chaleur (4) en contact thermique satisfaisant avec la plaque de base (2), un élément chauffant (6) en contact thermique satisfaisant avec la partie de diffusion (4) et une région de détection (8) recevant un capteur thermique dans lequel ladite région de détection (8) n'est pas directement connectée à la partie de diffusion (4) et est au moins partiellement entourée par une paroi formée par la plaque de base ou fixée sous forme de partie séparée à celle-ci, et dans lequel ledit capteur thermique est conçu pour mesurer la température de liquide dans la bouilloire à travers la base chauffée afin pour la bouilloire d'amener le liquide ou de le conserver à une température au-dessous de l'ébullition.

2. Bouilloire comme revendiqué dans la revendication 1, dans laquelle une seconde partie de diffusion de chaleur (14) est agencée entre le capteur thermique et la plaque de base (2).

3. Bouilloire comme revendiqué dans la revendication 2, dans laquelle ladite seconde partie de diffusion de chaleur (14) présente des caractéristiques similaires à la partie de diffusion de chaleur principale (4).

4. Bouilloire comme revendiqué dans les revendications 2 ou 3, dans laquelle ladite seconde partie de diffusion de chaleur (14) est constituée d'aluminium.

5. Bouilloire comme revendiqué dans l'une quelconque des revendications précédentes, dans laquelle la paroi (12) entoure complètement la région de détection (8).

6. Bouilloire comme revendiqué dans l'une quelconque des revendications précédentes, dans laquelle la paroi (12) est agencée en formant un canal dans le côté supérieur face au liquide de la plaque de base (2).

7. Bouilloire comme revendiqué dans l'une quelconque des revendications précédentes, dans laquelle l'élément chauffant (6) comporte un élément de résistance gainé.

8. Bouilloire comme revendiqué dans l'une quelconque des revendications précédentes, dans laquelle la région de détection (8) est positionnée sensiblement au centre sur la plaque de base (2).
